# EUROPEAN PATENT SPECIFICATION

(11) **EP 2 499 944 B1**
(45) Date of publication and mention of the grant of the patent: **26.08.2015**
(21) Application number: 09851214.8
(22) Date of filing: 08.12.2009
(51) Int. Cl.: A47J 19/00, A47J 43/046, A23N 1/02, A47J 43/08, B01F 7/00, B01F 7/16, B01F 15/00

(54) **MULTI-BLADE MULTI-SHAFT STIRRER FOR FRUITS AND VEGETABLES**
RÜHRGERÄT MIT MEHREREN KLINGEN UND WELLEN FÜR OBST UND GEMÜSE
BRASSEUR À ARBRES MULTIPLES ET LAMES MULTIPLES POUR FRUITS ET LÉGUMES

(30) Priority: 13.11.2009 CN 200910222714
(43) Date of publication of application: 19.09.2012
(73) Proprietor: SHENZHEN MUREN APPLIANCE CO., LTD., Loucun, Gongming, Guangdong New District Shenzhen (CN)
(72) Inventor: Wang, Wenxiong, Hubei 435501 (CN)
(74) Representative: Intès, Didier Gérard André
(86) International application number: PCT/CN2009/075338
(87) International publication number: WO 2011/057459

(56) References cited:
- EP-A1- 2 080 462
- CN-Y- 2 730 284
- CN-Y- 201 008 518
- DE-A1- 3 616 159
- DE-B- 1 164 042
- GB-A- 686 771
- GB-A- 2 328 145
- GB-A- 2 328 145

## Description

### FIELD OF THE INVENTION

The present utility model invention relates to an apparatus for smashing and squeezing fruits, vegetables and beans, more particularly to a transmission structure of the stirring blade in the apparatus. State of the art documents related to the invention are, GB 2 328 146, DE 36 16 169, EP 2060 462, DE 11 64 042, GB 686 771.

### BACKGROUND OF THE INVENTION

Blenders are used to smash and squeeze fruits for juice. A conventional blender is constructed with a single shaft and a single blade. The stirring blade is driven by the motor to smash the fruits in a container. However, in case of high-speed rotation, such structure, under the force, enables the food to rotate in the same direction as the stirring blade. In other words, the food synchronously rotates with the stirring blade; therefore, the smashing, stirring and squeezing effects and efficiency are largely reduced. Although a type of blender with two stirring blades are available in foreign markets, the containers generally have round or regular shapes, and the stirring surface formed by the two stirring blades does not meet the shapes of the container. Consequently, when the blender is in operation, there are more dead angles, thus the stirring effect is often less satisfactory than that produced by a single blade.

### SUMMARY OF THE INVENTION

The present utility model invention aims at providing a transmission structure of the stirring blade in the stirrer, available for producing fine fruit and vegetable juice within a shorter stirring time.

To achieve the above objective, the utility model invention adopts the following technical solution:
A multi-blade multi-shaft stirrer for fruits and vegetables comprises a motor, at least three stirring blade groups and at least three stirring blade group driving shafts, wherein each stirring blade group is connected to a driving shaft, the motor is connected to a driving wheel, each driving shaft is disposed with a driven wheel, and the driven wheel, driven by the driving wheel which is driven by the motor, drives each stirring blade to rotate.

The stirring blade comprises a steel ring sleeve joint part and a driven wheel sleeve joint part, wherein the steel ring sleeve joint part is disposed in a steel ring, with the lower end extruding out of the driven wheel sleeve joint part, the steel ring is disposed with an upper seal ring and a lower seal ring, the driven wheel sleeve joint part passes through the driven wheel both top and bottom of which are respectively disposed with an upper bearing and a lower bearing, the stirring blade seat is disposed with a stationary shaft matching the stirring blade, the center of the stationary shaft is disposed with an aperture, the bottom of the driven wheel sleeve joint part in the stirring blade seat is disposed in the stationary shaft and rotates in the aperture, driven by the driven wheel.

An upper bakelite washer and a lower bakelite washer are respectively disposed between the driven wheel and the upper/lower bearings.

A plastic washer is disposed between the upper bakelite washer and the upper bearing.

A separation-reunion structure is disposed between the motor and the driving wheel.

The separation-reunion structure comprises a connector above the motor and a clutch on the connector, wherein the connector comprises a base plate which is disposed with a round space equally divided into six parts, an axle hole is disposed in the middle of the base plate and the equally divided round space; the clutch comprises a circular terminal disc the circle of which is uniformly disposed with six triangles stretching downwards perpendicularly and matching with the six equally divided parts of the round space.

The motor is connected to the driving wheel by a main shaft which is divided into an upper driving wheel connection part and a lower clutch connection part.

The stirring blade groups comprise three stirring blades uniformly distributed on a circle.

The stirring blade group is a four-leaf blade group.

The transmission structure of the stirring blade in the stirrer is disposed with two or more stirring blades, so that when fruits and vegetables are stirred, the stirring blades have plural working points and dispersed working areas in a juice holding container, thus realizing equal stir of fruits and vegetables. No matter where pieces of fruits and vegetables are located in the juice holding container, they can be stirred evenly. Because of such design of multi-shaft and multi-blade as well as crossed mixed flow and rotation, the stirring smashing, stirring and juicing effects and efficiency are improved by 3-5 times on a conventional basis.

### BRIEF DESCRIPTION OF THE DRAWINGS

FIG. **1** is a installation diagram of the embodiment of the present utility model invention.
FIG. **2** is an exploded view of a multi-shaft part of the embodiment of the present utility model invention.
FIG. **3** is a structural representation of a connector of the embodiment of the present utility model invention.
FIG. **4** is a structural representation of a clutch of the embodiment of the present utility model invention.

The objective, functions and advantages of the present utility model invention are to be explained in further detail below with reference to the embodiment and attached drawings.

### DETAILED DESCRIPTION OF THE EMBODIMENTS

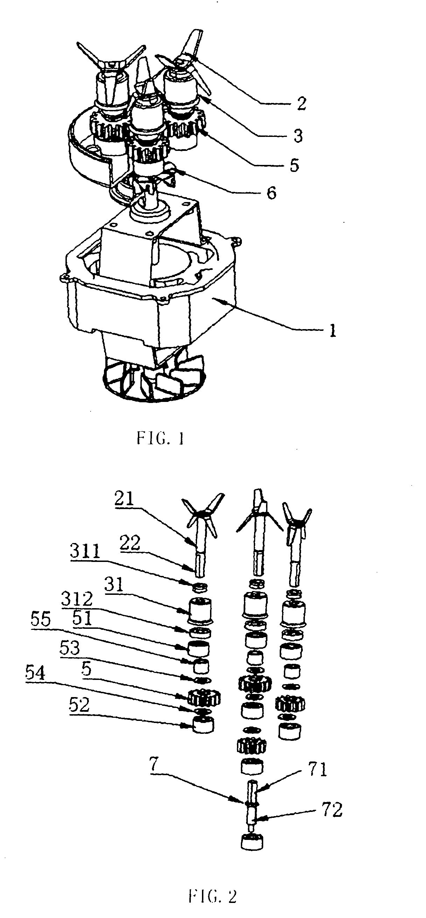

As shown in FIGS. 1-2, a transmission structure of the stirring blade groups of the stirrer in this example comprises a motor 1 and at least three stirring blade groups 2, in which each stirring blade group 2 is connected to a driving shaft 3, the motor 1 is connected to a driving wheel 4 (not shown in the Fig due to angular relationship, please see the Fig.); each driving shaft 3 is disposed with a driven wheel 5; and the driven wheel 5, driven by the driving wheel 4 which is driven by the motor 1, drives each stirring blade 2 to rotate.

The stirring blade group 2 of the embodiment comprises a steel ring sleeve joint part 21 and a driven wheel sleeve joint part 22, in which the driving shaft 3 comprises a steel ring 31, the steel ring sleeve joint part 21 is disposed in the steel ring 31, with the lower end extruding out of the driven wheel sleeve joint part 22, the steel ring 31 is disposed with an upper seal ring 311 and a lower seal ring 312, both the upper seal ring 311 and the lower seal ring 312 are used to seal liquid in the stirring cup of the stirrer, thus preventing water leakage, the driven wheel sleeve joint part 22 passes through the driven wheel 55 both top and bottom of which are respectively disposed with an upper bearing 51 and a lower bearing 52.

An upper bakelite washer 53 and a lower bakelite washer 54 are respectively disposed between the driven wheel 5 and the upper bearing 51 and between the driven wheel 5 and the lower bearing 52.

A plastic washer 55 is disposed between the upper bakelite washer 53 and the upper bearing 51. The upper bakelite washer 53 is used for wear resistance, while the plastic washer is mainly used for padding.

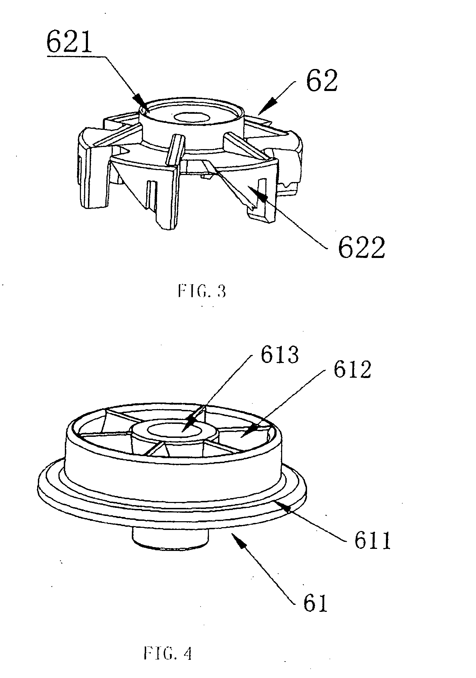

As shown in Figs. 1, 3 and 4, a separation-reunion structure 6 is disposed between the motor 1 and the driving wheel 4. The motor is connected to a main shaft 7 which is divided into an upper driving wheel connection part 71 and a lower clutch connection part 72.

The separation-reunion structure 6 comprises a connector 61 above the motor 1 and a clutch 62 on the connector 61, in which the connector 61 comprises a base plate 611 which is disposed with a round space 612 equally divided into six parts, an axle hole 613 is disposed in the middle of the base plate and the equally divided round space; the clutch 62 comprises a circular terminal disc 621 the circle of which is uniformly disposed with six triangles 622 stretching downward perpendicularly and matching with the six equally divided parts of the round space 612. The clutch is mainly used for connecting the stirring blade group and the motor as a whole, when the motor is in operation, the force is passed to a sun wheel via the clutch, and the sun wheel, engaged with a planet wheel, drives the stirring blade groups to stir.

The embodiment comprises three stirring blade groups 2 uniformly distributed on a circle, and the stirring blade group is a four-leaf blade group.

## Claims

1. A multi-blade multi-shaft stirrer for fruits and vegetables comprises a motor (1), at least three stirring blade groups (2) and at least three stirring blade group (2) driving shafts (3), wherein each stirring blade group (2) is connected to a driving shaft (3), the motor (1) is connected to a driving wheel (4), each driving shaft (3) is disposed with a driven wheel (5), and the driven wheel (5), driven by the driving wheel (4) which is driven by the motor (1), drives each stirring blade to rotate, wherein a separation-reunion structure (6) is disposed between the motor (1) and the driving wheel (4); wherein the separation-reunion structure (6) comprises a connector (61) above the motor (1) and a clutch (62) on the connector (61), wherein the connector (61) comprises a base plate (611) which is disposed with a round space (612) equally divided into six parts, an axle hole (613) is disposed in the middle of the base plate (611) and the equally divided round space (612); the clutch (62) comprises a circular terminal disc (621) the circle of which is uniformly disposed with six triangles (622) stretching downwards perpendicularly and matching with the six equally divided parts of the round space (612).

2. The multi-blade multi-shaft stirrer for fruits and vegetables according to claim **1**, wherein the stirring blade comprises a steel ring sleeve joint part (21) and a driven wheel sleeve joint part (22), wherein the steel ring sleeve joint part (21) is disposed in a steel ring (31), with the lower end extruding out of the driven wheel sleeve joint part (22), the steel ring (31) is disposed with an upper seal ring (311) and a lower seal ring (312), the driven wheel sleeve joint part (22) passes through the driven wheel (5) both top and bottom of which are respectively disposed with an upper bearing (51) and a lower bearing (52), the stirring blade seat is disposed with a stationary shaft matching the stirring blade, the center of the stationary shaft is disposed with an aperture, the bottom of the driven wheel sleeve joint part (22) in the stirring blade seat is disposed in the stationary shaft and rotates in the aperture, driven by the driven wheel (5).

3. The multi-blade multi-shaft stirrer for fruits and vegetables according to claim **1 or 2,** wherein an upper bakelite washer (53) and a lower bakelite washer (54) are respectively disposed between the driven wheel (5) and the upper/lower bearings (51, 52).

4. The multi-blade multi-shaft stirrer for fruits and vegetables according to claim **3,** wherein a plastic washer (55) is disposed between the upper bakelite washer (53) and the upper bearing (51).

5. The multi-blade multi-shaft stirrer for fruits and vegetables according to claim **1,** wherein the motor (1) is connected to the driving wheel (4) by a main shaft (7) which is divided into an upper driving wheel connection part (71) and a lower clutch connection part (72).

6. The multi-blade multi-shaft stirrer for fruits and vegetables according to claim **5,** wherein the stirring blade groups (2) comprise three stirring blades uniformly distributed on a circle.

7. The multi-blade multi-shaft stirrer for fruits and vegetables according to claim **6,** wherein the stirring blade group (2) is a four-leaf blade group.

## Patentansprüche

1. Rührgerät mit mehreren Klingen und Wellen für Obst und Gemüse, umfassend einen Motor (1), wenigstens drei Rührklingengruppen (2) und wenigstens drei Antriebswellen (3) für Rührklingengruppen (2), wobei jede Rührklingengruppe (2) mit einer Antriebswelle (3) verbunden ist, wobei der Motor (1) mit einem Antriebsrad (4) verbunden ist, wobei jede Antriebswelle (3) mit einem angetriebenen Rad (5) versehen ist, und das angetriebene Rad (5), das von dem Antriebsrad (4) angetrieben wird, das von dem Motor (1) angetrieben wird, jede Rührklinge in Drehung antreibt, wobei eine Trenn-Verbindungsstruktur (6) zwischen dem Motor (1) und dem Antriebsrad (4) angeordnet ist, wobei die Trenn-Verbindungsstruktur (6) einen Verbinder (61) oberhalb des Motors (1) umfasst, und eine Kupplung (62) auf dem Verbinder (61), wobei der Verbinder (61) eine Grundplatte (611) umfasst, die mit einem runden Raum (612), der gleichmäßig in sechs Teile geteilt ist, versehen ist, wobei eine Achsbohrung (613) in der Mitte der Grundplatte (611) und des gleichmäßig geteilten runden Raums (612) angeordnet ist, wobei die Kupplung (62) eine kreisförmige Endscheibe (621) umfasst, deren Kreis gleichförmig mit sechs Dreiecken (622), die sich senkrecht abwärts erstrecken und den sechs gleichmäßig geteilten Teilen des Rundraums (612) entsprechen, angeordnet ist.

2. Rührgerät mit mehreren Klingen und Wellen für Obst und Gemüse nach Anspruch 1, wobei die Rührklinge ein Stahlring- Hülsenverbindungsteil (21) und ein Hülsenverbindungsteil (22) des angetriebenen Rads umfasst, wobei das Stahlring-Hülsenverbindungsteil (21) in einem Stahlring (31) angeordnet ist, mit dem unteren Ende, das aus dem Hülsenverbindungsteil (22) des angetriebenen Rads hervortritt, wobei der Stahlring (31) mit einem oberen Verbindungsring (311) und einem unteren Verbindungsring (312) angeordnet ist, wobei das Hülsenverbindungsteil (22) des angetriebenen Rads durch das angetriebene Rad (5) hindurchgeht, dessen Oberseite und Unterseite jeweils mit einem oberen Lager (51) und einem unteren Lager (52) versehen sind, wobei der Rührklingensitz mit einer stationären Welle versehen ist, die zu der Rührklinge passt, wobei die Mitte der stationären Welle mit einer Öffnung angeordnet ist, wobei die Unterseite des Hülsenverbindungsteils (22) des angetriebenen Rads in dem Rührklingensitz in der stationären Welle angeordnet ist und angetrieben von dem angetriebenen Rad (5) in einer Öffnung dreht.

3. Rührgerät mit mehreren Klingen und Wellen für Obst und Gemüse nach Anspruch 1 oder 2, wobei eine obere Bakelitunterlegscheibe (53) und eine untere Bakelitunterlegscheibe (54) jeweils zwischen dem angetriebenen Rad (5) und dem oberen/unteren Lager (51, 52) angeordnet sind.

4. Rührgerät mit mehreren Klingen und Wellen für Obst und Gemüse nach Anspruch 3, wobei eine Kunststoffunterlegscheibe (55) zwischen der oberen Bakelitunterlegscheibe (53) und dem oberen Lager (51) angeordnet ist.

5. Rührgerät mit mehreren Klingen und Wellen für Obst und Gemüse nach Anspruch 1, wobei der Motor (1) mit dem Antriebsrad (4) über eine Hauptwelle (7) verbunden ist, die in einen oberen Antriebsradverbindungsteil (71) und einen unteren Kupplungsverbindungsteil (72) getrennt ist.

6. Rührgerät mit mehreren Klingen und Wellen für Obst und Gemüse nach Anspruch 5, wobei die Rührklingengruppen (2) drei Rührklingen umfassen, die gleichmäßig auf einem Kreis verteilt sind.

7. Rührgerät mit mehreren Klingen und Wellen für Obst und Gemüse nach Anspruch 6, wobei die Rührklingengruppe (2) eine vierblättrige Klingengruppe ist.

## Revendications

1. Agitateur à lames multiples et arbres multiples pour des fruits et des légumes comportant un moteur (1), au moins trois groupes de lames d'agitation (2) et au moins trois arbres d'entraînement (3) de groupe de lames d'agitation (2), dans lequel chaque groupe de lames d'agitation (2) est relié à un arbre d'entraînement (3), le moteur (1) est relié à une roue d'entraînement (4), chaque arbre d'entraînement (3) est disposé avec une roue entraînée (5), et la roue entraînée (5), entraînée par la roue d'entraînement (4) qui est entraînée par le moteur (1), entraîne chaque lame d'agitation afin de tourner, dans lequel une structure de séparation-réunion (6) est disposée entre le moteur (1) et la roue d'entraînement (4) ; dans lequel la structure de séparation-réunion (6) comporte un connecteur (61) au-dessus du moteur (1) et un embrayage (62) sur le connecteur (61), dans lequel le connecteur (61) comporte une plaque de base (611) qui est disposée avec un espace rond (612) divisé de manière égale en six parties, un trou d'axe (613) est disposé au milieu de la plaque de base (611) et de l'espace divisé de manière égale (612) ; l'embrayage (62) comporte un disque terminal circulaire (621) dont le cercle est uniformément disposé avec six triangles (622) s'étendant perpendiculairement vers le bas et correspondant aux six parties divisées de manière égale de l'espace rond (612).

2. Agitateur à lames multiples et arbres multiples pour des fruits et des légumes selon la revendication 1, dans lequel la lame d'agitation comporte une partie de jonction à manchon de bague en acier (21) et une partie de jonction à manchon de roue entraînée (22), dans lequel la partie de jonction à manchon de bague en acier (21) est disposée dans une bague en acier (31), avec l'extrémité inférieure qui s'extrude hors de la partie de jonction à manchon de roue entraînée (22), la bague en acier (31) est disposée avec un joint d'étanchéité supérieur (311) et un joint d'étanchéité inférieur (312), la partie de jonction à manchon de roue entraînée (22) passe à travers la roue entraînée (5) dont le dessus et le dessous sont tous les deux disposés de manière respective avec un palier supérieur (51) et un palier inférieur (52), le siège de lame d'agitation est disposé avec un arbre fixe correspondant à la lame d'agitation, le centre de l'arbre fixe est disposé avec une ouverture, le dessous de la partie de jonction à manchon de roue entraînée (22) dans le siège de lame d'agitation est disposé dans l'arbre fixe et tourne dans l'ouverture, entraînée par la roue entraînée (5) .

3. Agitateur à lames multiples et arbres multiples pour des fruits et des légumes selon la revendication 1 ou 2, dans lequel une rondelle supérieure en bakélite (53) et une rondelle inférieure en bakélite (54) sont disposées de manière respective entre la roue entraînée (5) et les paliers supérieur/inférieur (51, 52).

4. Agitateur à lames multiples et arbres multiples pour des fruits et des légumes selon la revendication 3, dans lequel une rondelle en matière plastique (55) est disposée entre la rondelle supérieure en bakélite (53) et le palier supérieur (51).

5. Agitateur à lames multiples et arbres multiples pour des fruits et des légumes selon la revendication 1, dans lequel le moteur (1) est relié à la roue d'entraînement (4) par un arbre principal (7) qui est divisé en une partie supérieure de connexion de roue d'entraînement (71) et partie inférieure de connexion d'embrayage (72).

6. Agitateur à lames multiples et arbres multiples pour des fruits et des légumes selon la revendication 5, dans lequel les groupes de lames d'agitation (2) comportent trois lames d'agitation réparties uniformément sur un cercle.

7. Agitateur à lames multiples et arbres multiples pour des fruits et des légumes selon la revendication 6, dans lequel le groupe de lames d'agitation (2) est un groupe de lames à quatre pales.
